# EUROPEAN PATENT SPECIFICATION

(11) **EP 1 315 632 B1**
(45) Date of publication and mention of the grant of the patent: **06.04.2005**
(21) Application number: 01967367.2
(22) Date of filing: 07.09.2001
(51) Int. Cl.: B60K 41/00, G05G 1/04, G05G 7/02

(54) **CONTROL DEVICE**
STEUERUNGSVORRICHTUNG
DISPOSITIF DE COMMANDE

(30) Priority: 08.09.2000 FI 20001987
(43) Date of publication of application: 04.06.2003
(73) Proprietor: Etelä-Suomen Autotalo OY, 15100 Lahti (FI)
(72) Inventor: LAUKKANEN, Mikko, FIN-33500 TAMPERE (FI)
(74) Representative: Hakola, Unto Tapani
(86) International application number: PCT/FI2001/000779
(87) International publication number: WO 2002/020297

(56) References cited:
- EP-A2- 0 738 623
- GB-A- 2 288 372
- US-A- 4 722 416
- US-A- 5 553 684

## Description

The invention relates to a control device according to the preamble of claim 1. The invention also relates to a method according to the preamble of the appended claim 14.

Control devices in cars, as well as in other motor-driven vehicles, typically comprise pedal control devices. For example, a car equipped with a manual gearbox normally comprises three separate foot pedals, *i.e.* the clutch, brake and accelerator pedals, wherein when driving, the driver will, at times, need to use both of his/her feet to operate said foot pedals. In a car equipped with automatic transmission, there is no separate clutch pedal, and when driving, it is also possible to use the brake and accelerator pedals with one foot only. However, even the use of a car equipped with automatic transmission and foot pedals is usually not possible, without separate auxiliary means, for disabled persons with significantly impaired lower limb capacity, or totally without said limbs or their capacity.

As persons with restricted mobility of their lower limbs only represent a fraction of the total number of vehicle drivers, it is not economically profitable for automobile manufacturers to make vehicles with control devices separately designed for disabled persons. Because of this, for said persons with restricted mobility, normal vehicles are equipped with auxiliary means and devices which are installed in said vehicle afterwards, to make it possible to use the required foot control devices for example by hand when driving. Typically, such modifications are made in a car with automatic transmission, *i.e.* by converting the operation of the brake and accelerator pedals to be, for example, hand-operated. In said modification, it is often necessary to take into account the capabilities and restrictions of the person with restricted mobility in an individual manner to achieve sufficient use ergonomics.

The following is a brief discussion on some solutions of prior art to convert pedal control devices in a vehicle to be hand-operated. In relation to the present invention, the focus will be on such known solutions which exert a force either directly on the original pedals in the vehicle or on some other mechanism in the vehicle, closely related to them.

US patent 5,129,492 (below '492) presents a hand control device fixed underneath the steering column in a car, in which a mechanical leverage, connected to a handle part intended for the driver and mainly consisting of rigid bars, is used to act on the original accelerator and brake pedals of the car. The leverage will press the accelerator pedal and the brake pedal, when the driver pulls said handle towards him/herself or pushes the handle away from him/herself, respectively.

Patent FR 2 745 534 (below '534) presents an alternative mechanical hand control device which is also connected to the steering column in a car and comprises a handle installed close to the steering wheel, within reach for the driver. When the driver moves said handle in the direction of the steering column, *i.e.* pushes the handle away from him/herself or pulls it towards him/herself, a mechanical leverage coupled to the handle will transmit the movement to the brake pedal. A movement of the handle in a direction transverse to said movement will transmit the movement of the handle into a wire equipped with a shield, the wire being coupled further to the mechanism controlling the position of the throttle in the car.

Manual control devices, such as those of the patents '492 and '534 which contain mechanical levers and are fixed to the vehicle in a stationary manner, involve the general problem that the handle intended for the driver cannot, because of said leverage, be freely placed in a desired location in the vehicle. Furthermore, the leverages or similar mechanical solutions are space consuming and they particularly disturb the use of legroom for the driver in the vehicle. Thus, for example in a situation in which the vehicle is driven by a healthy person, the normal use of the foot pedals is difficult or completely blocked. Normal driving is also disturbed by the movement of the leverages, or the like, of the hand control devices, as well as by the movement of the handle itself, when the pedals are operated in the normal way by foot.

US patent 5,813,944 (below '944) presents yet another hand control device, in which the handle used by the driver is a lever arranged at its lower end to be pivotable in relation to a shaft installed in a support. The forward or backward movement of said handle or hand lever is transmitted, by means of wires equipped with a shield, to the braking and accelerating mechanisms in the vehicle. The handle of the manual control device of the patent '944 can be placed, to some extent, more freely in a desired location in the vehicle than the handles of the above-mentioned devices comprising rigid mechanical levers. However, in the construction of the hand control device of the patent '944, the wires intended for controlling the accelerating and braking mechanisms extend from the support part of the handle in opposite directions in relation to each other, which will, as such, make the free placement of the handle more difficult. This is because said wires cannot be bent to curves which are more abrupt than a given minimum radius without stiffening the operation of the wire due to increased friction between the shell and the core of the wire. Furthermore, to secure the sensitive operation of the wires and thereby a good response at use, the length of the wires should also be kept as short as possible, which will further make the free placement of the handle in the car more difficult.

Moreover, hand control devices are known which apply, instead of the driver's own muscular strength, another force produced by an external power source to exert a force on the pedal control devices in the vehicle. US patent 4,722,416 (below '416) presents a solution in which a joystick used as a handle is applied to operate a control valve which transmits a hydraulic pressure produced by a hydraulic pump to hydraulic cylinders coupled to the brake and accelerator pedals. Solutions of this kind have the advantage that the driver will only need a little muscular strength to move the joystick/handle, wherein the solution is particularly suitable for persons who also have impaired or restricted capacity of the upper limbs. A disadvantage, however, is the relatively complex and thereby also expensive structure of the hand control device, because, for its operation, the device will require an external power source, such as *e.g.* a hydraulic pump. Furthermore, the response of use is typically poorer when using a joystick compared with said mechanical solutions.

The response at use of the control device, that is, the counter-force or a kind of feedback felt in the handle and facilitating the use, *e.g*. during braking or acceleration with the handle, is an essential factor in the safe use of the vehicle in traffic. This fact is considered, for example, in the patent '944, which also presents some additional features improving the feedback feeling and thereby facilitating the adjustability according to the driver, compared with a previous patent US 5,282,522 by the same inventor. However, in both of these patents, the force and the movement from the driver's handle to the control devices of the car are transmitted expressly by wires. In these patents, the aim has been to improve the feedback feeling, as well as the adjustability according to the driver, by altering the transmission ratios and the structure of the mechanism transmitting the movement of the handle to the wires.

EP 738 623 A, which is considered as closest prior art document, discloses a servo-assisted hydraulic control device for operating the brake and/or accelerator pedals, intended to be used by persons unable to use their legs. This servo-control is relatively complicated.

In the present invention, the main aim is to achieve a simple and in-expensive control device which makes it possible to use the original pedal control devices of a vehicle by avoiding the drawbacks and/or restrictions of the above-mentioned solutions of prior art. Furthermore, the aim is to achieve a method for converting the original pedal control devices of the vehicle to be operable by a control device to be installed in the vehicle.

To attain this purpose, the control device according to the invention is primarily characterized in what will be presented in the characterizing part of the independent claim 1.

The method according to the invention, in turn, is primarily characterized in what will be presented in the characterizing part of the independent claim 14.

The other dependent claims present some preferred embodiments of the invention.

The invention is based on the inventive and novel idea that the force and movement exerted by the driver with his/her own muscular strength on the actuator of the control device are transferred, not by mechanical or similar arrangements, but hydrostatically to the original foot pedal/pedals, or mechanisms closely related to them, in the vehicle.

In an advantageous embodiment of the invention, this is achieved in such a way that the movement of the actuator of the control device, for example the handle of the control device, is arranged to exert a force on a first piston means of the first hydraulic cylinder in connection with said actuator, from which hydraulic cylinder the volume flow and fluid pressure of the hydraulic fluid caused by the movement of said piston means are led along a pipe to another hydraulic cylinder in the vicinity of the pedal in the vehicle, the movement and force of the second piston means of the hydraulic cylinder being further transmitted to the pedal/pedal mechanism in the vehicle. Thus, said so-called first hydraulic cylinder placed in connection with the actuator of the control device, a so-called second hydraulic cylinder placed in the vicinity of the original foot pedal in the vehicle, as well as the pipe combining said hydraulic cylinders, constitute an independent hydraulic circuit which does not contain, except for the driver's own muscular strength, other external power sources, such as for example servo units, hydraulic pumps, or the like. Consequently, said independent hydraulic circuit is only driven by the driver's muscular strength.

In an advantageous embodiment of the invention, when the driver pushes the handle used as the actuator in a first direction, for example away from him/herself, a force is exerted, by means of a hydraulic circuit of the above-described type, on the mechanism of the brake pedal in the vehicle, and when the driver pulls the handle in the opposite direction, for example towards him/herself, a force is exerted, in a corresponding way by means of a hydraulic circuit separate from said first hydraulic circuit, on the mechanism of the accelerator pedal. Said solution is easy to use, and it will also prevent the unintentional simultaneous use of the accelerator and brake pedals.

In an advantageous embodiment of the invention, the feedback feeling of the control device is optimized and/or the suitability of the properties of the control device for the driver and/or the vehicle is adjusted by altering the ratio between the areas of the piston means in said first and second hydraulic cylinders of the hydraulic circuit. In other words, said ratio between the areas is altered to adjust the length of the movement of the actuator, *e.g.* a handle, and the force required to produce said movement, which are needed to produce a certain kind of a movement and a force exerted on the mechanism of the foot pedal in the vehicle.

In an advantageous embodiment of the invention, the feedback feeling, is improved and/or the driver-specific suitability of the properties of the control device is adjusted by altering the length of the lever arm of the actuator. To put it more precisely, by altering the lever arm which converts the movement of the actuator to a movement of the piston means in the first hydraulic cylinder, a change is made in the length of the movement of the actuator required for producing the movement of said piston means, as well as in the force required for it.

The following is a description on some of the most important advantages of the control device according to the invention, compared with the above-presented solutions of prior art.

In the control device of the invention, the actuator intended for the driver can be installed in a location which can be selected much more freely in the vehicle than in solutions of prior art. For example, if the actuator is a handle, the handle can be placed to be operated either by the right hand or the left hand of the driver. This is possible, because the coupling between the first hydraulic cylinders in connection with the actuator and the second hydraulic cylinders in connection with the pedal mechanisms can be implemented by using a pressure-tight pipe or tube with a small diameter. Advantageously, for example a flexible hydraulic pipe of plastic, rubber or the like can be used for this purpose, wherein the actuator can also be easily moved aside, for example when the driver sits down or gets up from the seat in the vehicle, or when the vehicle is operated in the normal way with pedal control devices. The actuator of the control device according to the invention can also be fixed, for example, to the driver's seat, wherein it moves with the seat when the distance between the seat and the steering wheel is being adjusted. Furthermore, the control device according to the invention comprises no parts which might disturb possible other passengers in the vehicle.

If necessary, said hydraulic pipe or tube can also be bent in abrupt curves or be equipped with separate elbow fittings, quick release couplings, or the like, without affecting the sensitivity, feedback feeling or other operation of the control device. This makes it possible to place and install the pipes in the vehicle in such a way that they are out of the driver's way and preferably also neatly tucked away in the structures of the control panel, or the like, in the vehicle. The installation of the hydraulic pipes can be implemented without damaging the original upholstery or other structures in the vehicle. Furthermore, the length of the hydraulic pipes is not substantially limited, which will further facilitate the placement of the control device according to the invention in the vehicle.

The movement and force transmitted hydrostatically by the actuator of the control device into the pedal mechanism will give the user a considerably better feedback feeling than prior art solutions applying mechanical levers and wires. This results, for example, from the fact that the frictions effective in the hydraulic circuit remain more stable than in mechanical solutions, for example solutions applying wires with shields. Furthermore, in the solution according to the invention, there are no clearances, or the like, which typically occur in mechanical lever couplings as a result of wearing, or other inaccuracies impairing the feedback feeling, to such an extent as in many hand control devices of prior art.

As said second hydraulic cylinders of the control device according to the invention are arranged to exert a force directly on the original pedals of the vehicle, preferably the pedal arms above the use surfaces intended for foot use, the changes to be made for installing the control device according to the invention in the vehicle remain slight. Said hydraulic cylinders take little space in the legroom for the driver in the vehicle, and the pedals can also be used in the normal way by foot. When the pedals are used by foot, the actuator or other parts of the control device according to the invention do not move in a way that might disturb the driver.

The control device according to the invention does not, by itself, cause an increased risk of injury for the driver in an accident situation, nor does it in any way disturb the operation of the security mechanisms in the vehicle. In other words, since the control device according to the invention does not comprise bars or other rigid structures in front of the driver's chest or lower limbs, the risk of injury of the driver in a collision is not increased by the structural parts of the control device. Also, the collapse of the steering column, the control panel or other structural parts in the vehicle, to absorbe energy in a collision, may take place in a way designed by the manufacturer of the vehicle.

The control device according to the invention is simple in its structure and is inexpensive, and it can be easily installed in various vehicles in such a way that the driver is provided the best possible use ergonomics. The feedback feeling of the control device according to the invention is good for the driver, making the use of the control device easy and safe in traffic.

As the control device according to the invention can be considered equally reliable or even better in this respect than known mechanical solutions based on *e.g*. bars and wires, the control device according to the invention can thus also be officially recognized suitable for use in road traffic.

The following more detailed description of the invention will more clearly illustrate, for anyone skilled in the art, possible embodiments of the invention as well as advantages to be achieved with the invention in relation to prior art.

In the following, the invention will be described in more detail with reference to the appended drawings, in which
- Fig. 1: shows, in a principle view, one embodiment of the control device according to the invention, and its operation,
- Fig. 2: illustrates the embodiment of Fig. 1 in a situation in which the foot pedal of the vehicle is used in the normal way by foot,
- Fig. 3: shows a more detailed enlargement of the area "X" marked in Fig. 2,
- Fig. 4: illustrates the operation of the embodiment of Fig. 1 in a situation of starting uphill,
- Fig. 5: illustrates the placement of the components of the control device according to the invention in connection with the foot pedals in a vehicle,
- Fig. 6: illustrates the placement of the components of the control device according to the invention in the cockpit of a vehicle,
- Fig. 7: shows, in a principle view, a second, alternative embodiment of the actuator of the control device according to the invention, and
- Fig. 8: shows, a third alternative embodiment of the actuator of the control device according to the invention.

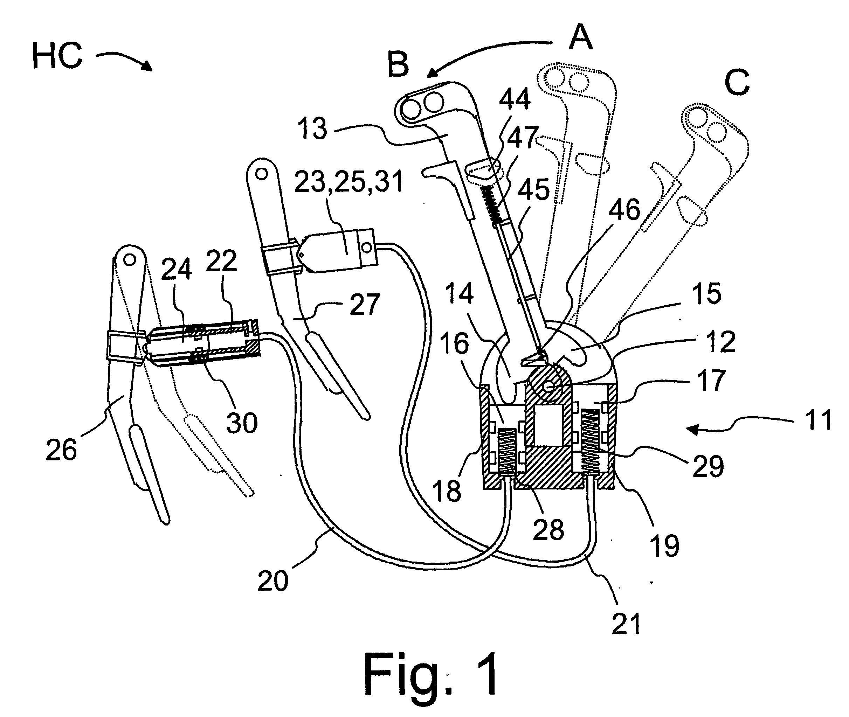

For the sake of clarity, the method and device according to the invention will be illustrated, in the following examples and in the Figs. 1 to 8, by means of such embodiments of the invention in which the actuator of the control device is intended to be hand-operated. However, the embodiments of the invention are not restricted to hand-operated control devices only, but the control device of the invention can also be operated, either partly or wholly, by other, one or more body parts of the driver in a way which best complies with the personal properties and skills of the driver with restricted mobility.

Figure 1 shows, in a principle view, an advantageous embodiment of a control device HC according to the invention. An operational part 11 comprises, an actuator, *i.e,* a handle 13, which is pivotable at its lower end in relation to a shaft 12 and is equipped with press means 14 and 15 effective on piston means 16 and 17 when the handle 13 is pivoted in relation to the shaft 12. Said piston means 16 and 17 are placed in hydraulic cylinders 18 and 19. Said so-called first hydraulic cylinders 18 and 19 are coupled by means of pipes 20 and 21 to so-called second hydraulic cylinders 22 and 23 fixed close to the pedal mechanisms in a vehicle. The first hydraulic cylinder 18, with the pipe 20 and the second hydraulic cylinder 22, constitutes a separate and independent first hydraulic circuit, and, correspondingly, the hydraulic cylinder 19, with the pipe 21 and the hydraulic cylinder 23, constitutes a separate and independent second hydraulic circuit.

When the handle 13 is moved, as shown in Fig. 1, in the direction indicated by the arrow towards the handle position B, the press means 14 will further press the piston means 16 which will, accordingly, cause a reduction in the space of the first hydraulic cylinder 18 and thereby a flow of hydraulic fluid from the first hydraulic cylinder 18 along the pipe 20 into the second hydraulic cylinder 22. The piston means 24 of said second hydraulic cylinder 22 will be pushed outwards inside the hydraulic cylinder 22 and will press a foot pedal 26 proportionally to the length of the movement caused in the handle 13 and to the force exerted on said handle.

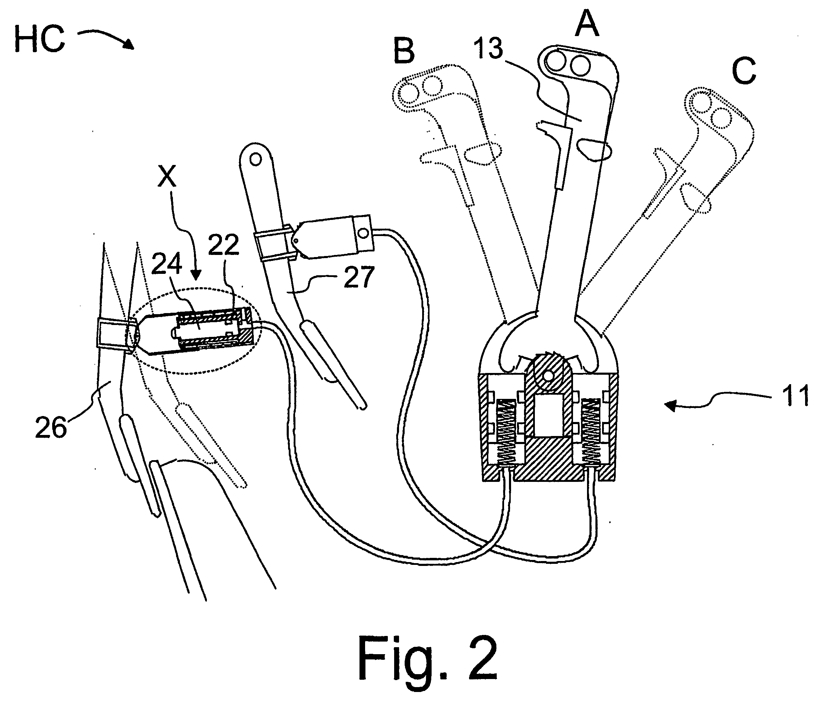

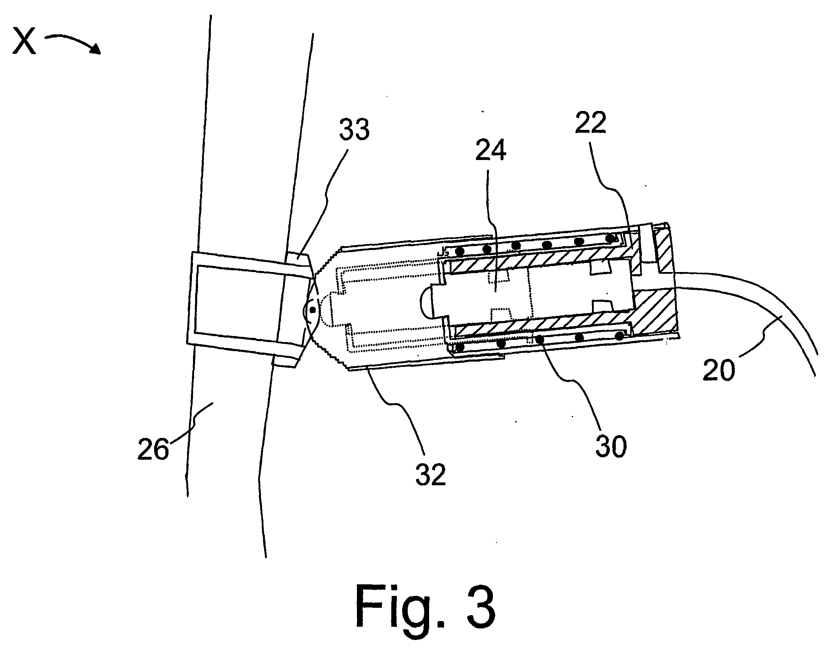

When the driver pulls the handle 13 from the position B of Fig. 1 in the opposite direction, back towards the normal position A, the foot pedal 26 will, after the effect of the force pressing the foot pedal has thus ceased, tend to return to its release position, the release position of the foot pedal 26 being indicated by a broken line in Fig. 1. At the same time, a force produced by a return spring for the foot pedal 26 or by another return mechanism will also tend to press the piston means 24 and the piston means 16 back to the normal position in such a way that the movement of the piston means 16 will follow the movement of the handle 13, keeping the piston means 16 in contact with the press means 14. In addition to the return mechanism in the foot pedal 26 of the vehicle, the first hydraulic cylinder 18 (and, respectively, the hydraulic cylinder 19) and/or the second hydraulic cylinder 22 (and, respectively, the hydraulic cylinder 23) of the control device HC may also comprise a return means, such as a spring, which tends to return the piston means of said hydraulic cylinders to the release position corresponding to the position A of the handle 13. Figure 1 shows return means 28 and 29 placed within the first hydraulic cylinders 18 and 19. In a corresponding manner, the second hydraulic cylinders 22 and 23 are equipped with return means 30 and 31, placed outside the hydraulic cylinders 22 and 23 and, correspondingly, outside the piston means 24 and 25. This structure will be described in more detail below in connection with Figs. 2 and 3.

When the piston means 16 and/or 17 is in its normal (upper) position corresponding to the position A of the handle 13, in its own first hydraulic cylinder 18 and/or 19, a tank 35 included in the operating part 11 is provided with a connection to said first hydraulic cylinder. In other words, when said piston means is in its upper position, hydraulic fluid can, if necessary, flow from the tank 35 through a hole, or the like, into said hydraulic cylinder, and *vice versa.* Thus, for example in a situation, in which there is a fluid deficit/loss in either of the independent hydraulic circuits, the hydraulic fluid quantity of said circuit can be supplemented by fluid flowing from the tank 35, when air is simultaneously discharged from said hydraulic cylinder. In a corresponding manner, a change in the volume of hydraulic fluid in the hydraulic circuit, caused by thermal expansion, may cause a flow of the hydraulic fluid from said circuit into the tank 35. The tank 35 is thus used as an expansion tank to prevent unintentional pressurization of said hydraulic circuit, when the handle 13 is in the position A. When the piston means 16 and 17 moves from its upper position, pressed by the corresponding press means, the connection between the tank 35 and said hydraulic cylinder 18, or, correspondingly, between the tank 35 and the hydraulic cylinder 19, is closed, wherein said independent hydraulic circuit can be pressurized in a way corresponding to the force exerted by the driver on the handle 13.

In a situation in which the handle 13 is turned from the normal position A towards the position B and the driver looses his/her grip on the handle 13, the handle 13 will return, due to the above-described return mechanisms, to the normal position A. To secure this, the handle 13 can also be equipped with a separate return means, such as a return spring, arranged in connection with the shaft 12. Said return means arranged in connection with the shaft 12 can also be used to adjust the feedback feeling of the handle 13.

As shown in Fig. 1, when the handle 13 is moved from the normal position A towards the position B, a force will only be exerted on the so-called first hydraulic circuit consisting of the hydraulic cylinder 18, the pipe 20 and the hydraulic cylinder 22. The second hydraulic circuit formed by the hydraulic cylinder 19, the pipe 21 and the hydraulic cylinder 23 will remain in the release position and thus not affect the foot pedal 27. In a corresponding manner, when the handle 13 is moved from the normal position A towards the position C, a force will only be exerted on said second hydraulic circuit and foot pedal 27.

Figure 2 illustrates the embodiment of the invention shown in Fig. 1 in a situation in which the foot pedal 26 of the vehicle is used in the normal way by pressing with a foot. In Fig. 2, the handle 13 is in its normal position A. Thus, since the piston means 24 included in the hydraulic cylinder 22 is not fixed to the pedal 26 in a stationary manner, the handle 13 will not move from the normal position A when the foot pedal 26 is operated normally by foot. The return means 28 and 29 and/or 30 and 31 will keep the handle 13 in said normal position A. The corresponding principle of operation will also apply to the foot pedal 27. A more detailed enlargement of the area "X" of Fig. 2 is shown in Fig. 3.

Figure 3 shows, in a principle view, an advantageous way of implementing the so-called second hydraulic cylinder 22 (or the hydraulic cylinder 23, respectively) coupled to the foot pedal 26 (or the foot pedal 27, respectively). The piston means 24 is arranged to be movable within the hydraulic cylinder 22 in such a way that a return means 30, such as a return spring, placed outside said hydraulic cylinder and said piston means, will return the piston means 24 to its normal position in a situation in which this is made possible by the volume flow and hydraulic pressure of the hydraulic fluid effective via the tube 20.

Furthermore, the hydraulic cylinder 22 is preferably equipped with a protective tube 32, which protective tube 32 is connected in a pivotable manner to a counterpiece 33 fixed on the arm of the foot pedal 26. The protective cover 32 will thus move with the foot pedal 26 when said foot pedal is operated in the normal way by foot. The purpose of the protective tube 32 is to prevent any extra piece, such as, for example, conductors, wires, or the like, placed under the control panel of the vehicle, from being stuck in the gap between the piston means 24 and the pedal 26 and possibly causing a danger situation during the use of the control device HC. Furthermore, the protective tube 32 will protect the piston means 24 and the hydraulic cylinder 22 from sand and dust which are harmful for their operation, and, if necessary, prevent the piston 24 from being displaced in relation to the hydraulic cylinder 22. The counterpiece 33 is preferably made so that the surface of said counterpiece facing the piston means 24 is made of a flexible material, wherein the use of the control device HC will not cause disturbing mechanical sounds when the piston means 24 hits the counterpiece 33. In an alternative manner, the end surface of the piston means 24 facing the counterpiece 33 can be arranged to be flexible. However, said surfaces can also be non-flexible, for example made of metal.

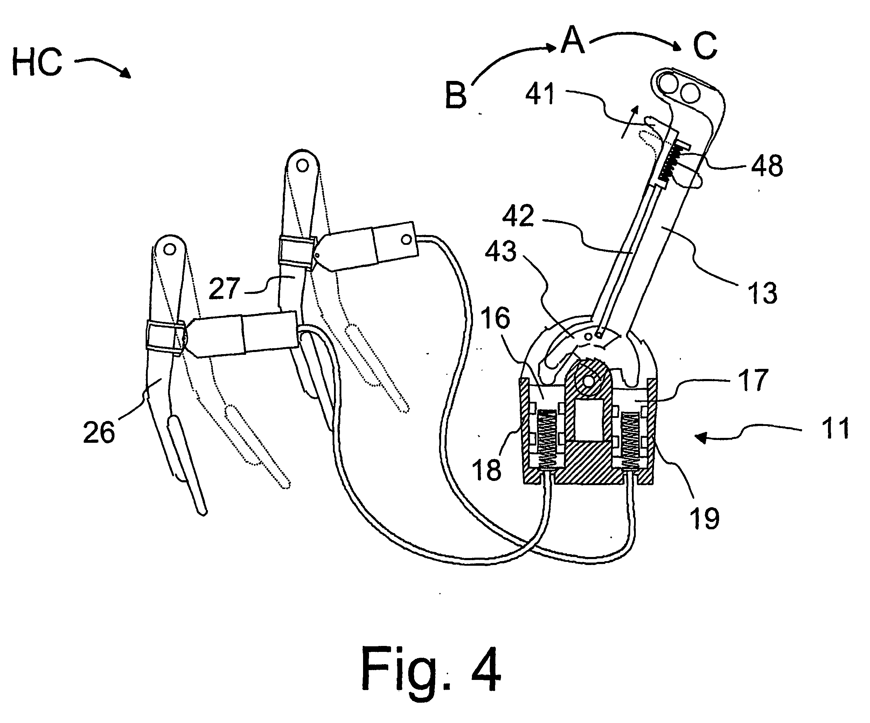

Figure 4 illustrates the operation of the control device HC according to the invention in a situation of starting uphill by using said control device. When the vehicle is stopped uphill in the driving direction, for example at traffic lights, the driver keeps the vehicle in position by pressing the handle 13 forward towards the position B and thereby exerting a force on the brake pedal 26. When starting to move, the driver moves the handle 13 from the position B via the normal position A towards the position C. Doing this, and now to prevent the vehicle from moving backwards, the driver will simultaneously lift an operating lever 41 placed in the handle 13 up in the direction of the arm of the handle 13. The operating lever 41 will, by means of lever means 42, 43, exert a force on the piston means 16 in the hydraulic cylinder 18, wherein a force is further exerted on the brake pedal 26. At the stage when the driver has turned the handle 13 in such a position in the direction C in which a force is exerted on the piston means 17 in the hydraulic cylinder 18 in such a way that the vehicle remains in its position uphill by the effect on the accelerator pedal 27, the driver releases the operating lever 41 to return to its normal position by the effect of a return means 48.Thus, when the brake pedal 26 is released accordingly, it is possible to start to move by accelerating, by pushing the handle 13 further away towards the position C. Consequently, the operating lever 41 makes it possible to intentionally and simultaneously exert a force on both the accelerator and the brake pedals of the vehicle by using the control device HC.

To keep the vehicle in position by means of the brake in a situation in which the driver must loosen his/her grip on the handle 13, for example to move, in a car with automatic transmission, the gear selecting means from the "neutral" position to the "drive" position, the position of the handle 13 can be locked in its suitable position towards the position B, by using a locking lever 44 shown in Fig. 1. In other words, for example when starting the vehicle and starting to move, the driver will thus first push the handle 13 towards the position B in such a way that the brakes of the vehicle are coupled on, and after this the driver will lock the handle 13 in said position by pushing the locking lever 44 placed in the handle 13 down in the direction of the handle 13. The locking lever 44 will, by means of a bar means 45 and a locking means 46, lock said position of the handle 13 in relation to the frame part of the operating part including the hydraulic cylinders 18 and 19. The frame part of the operating part 11 comprises holes, or the like, designed to comply with a locking claw, or the like, in the locking means 46, the holes preventing said locking claw and the handle 13 from turning towards the position A but making it possible to tension the brakes in a desired position by pushing the handle 13 further towards the position B. The brakes being thus coupled, the driver can release his/her grip on the handle 13 and turn on the engine of the vehicle as well as move the gear selecting means from the "neutral" position to the "drive" position without unintentionally moving the vehicle. When starting to move, the driver unlocks the handle 13 by pushing the handle slightly in the direction B, wherein the locking is released as the release means 47 moves the locking lever 44 up to its normal position without the driver needing to lift up the locking lever 44. When the locking is released in the above-described manner, the driver's hand will be ready on the handle 13 and he/she can start to move by using the handle 13 in the normal way. Consequently, the locking lever 44 makes it possible to use the control device according to the invention in the same way as a separate hand brake. For reasons of security, the operation of the locking lever 44 is arranged so that the handle 13 cannot be locked in such a position in which it exerts a force on the accelerator pedal. Also, to release the locking lever 44 from the braking position, the handle 13 must always be pushed in the direction B, which measure is used to secure that when the locking is released, the driver is ready, if necessary, to continue the braking by means of the handle 13 itself.

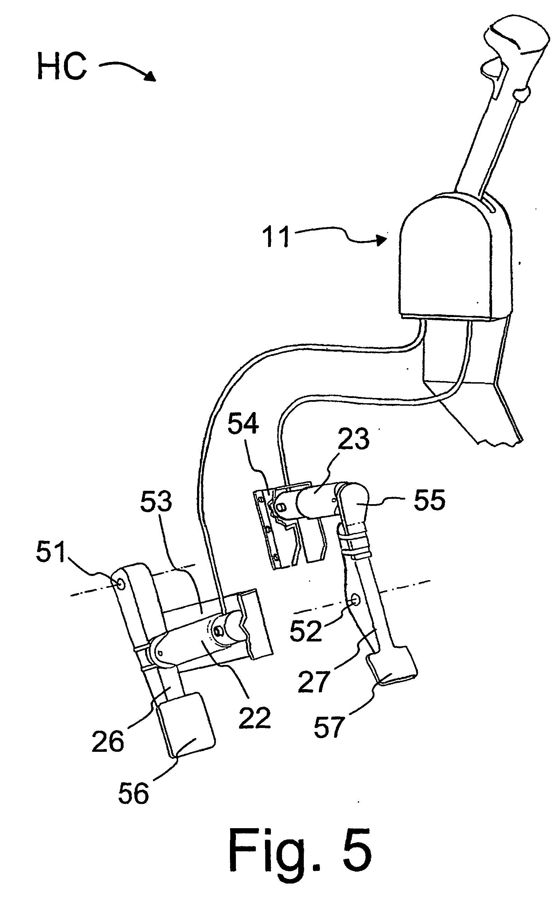

Figure 5 illustrates one possible placement of the components of the control device HC according to the invention in connection with the foot pedals of the vehicle. As shown in Fig. 5, the hydraulic cylinder 22 is fixed, by means of a fixing means 53, to the stationary structures of the cockpit/frame of the vehicle, such as, for example, the so-called firewall between the cockpit and the engine compartment. The hydraulic cylinder 22 is effective on the arm of the pedal 26, in the part between the pivot 51 of said pedal and the original use surface 56 of the pedal 26. In a corresponding manner, the hydraulic cylinder 23 is fixed to the structures of the vehicle by means of a fixing means 54 in such a way that the hydraulic cylinder is effective on the arm of the pedal 27 above the pivot 52 of said pedal. For this reason, an auxiliary means 55 may be fixed to the arm of the pedal 27, if necessary. It is also possible that the auxiliary means 55 comprises leverages *etc.*, by means of which the hydraulic cylinder 23 can be placed further away from the pedal 27. For anyone skilled in the art, it will be obvious that there are several ways to fix the so-called second hydraulic cylinders in the vehicle as well as to transmit the movement of the piston means included in said hydraulic cylinder to the foot pedals of the vehicle or to auxiliary mechanisms connected to them, *etc.*

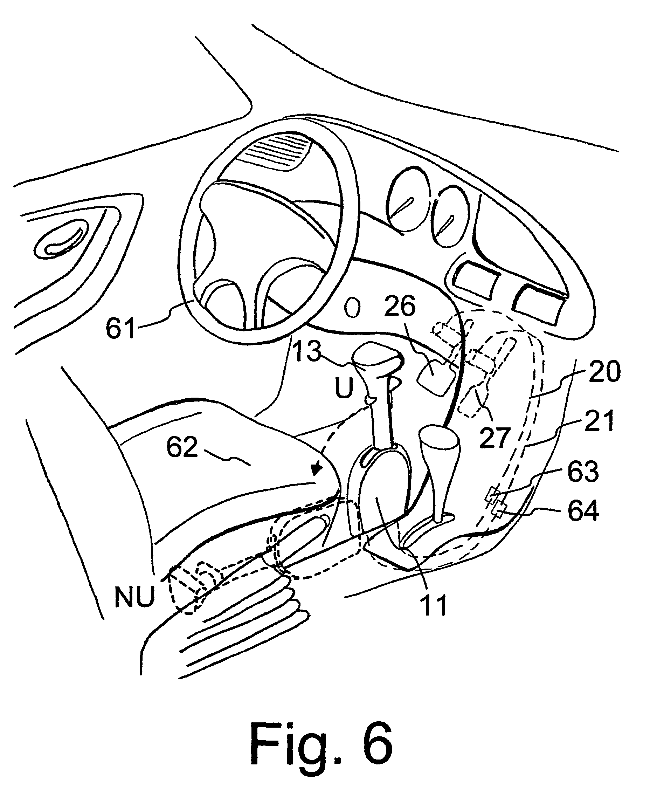

Figure 6 illustrates one possible placement of the different parts of the control device HC according to the invention in a vehicle with automatic transmission, wherein the brake pedal 26 and the accelerator pedal 27 can be operated by means of the handle 13 in the operational part 11. Preferably, the operation of the control device is arranged so that when the driver pulls the handle 13 towards himself/herself, a force will be exerted on the accelerator pedal 27, and, in a corresponding manner, when the driver pushes the handle 13 away from him/herself, a force will be exerted on the brake pedal 26. In contrast with the example of Fig. 6, the operational part 11 can be placed in a desired location in relation to the steering wheel 61 and in a desired position either on the right hand side or on the left hand side of the steering wheel 61. Thus the actuator 13, for example a handle, can be arranged to be operated either by the right hand or the left hand of the driver. The operational part 11 can be fixed to the structures in the cockpit of the car either in a stationary manner or in such a way that the operational part 11 can be easily detached from its use position U and be transferred to a non-use position NU (indicated with a broken line in Fig. 6). In the non-use position NU, the operational part 11 is out of the driver's way, for example, when the driver gets off the vehicle or gets in the vehicle, on the driver's seat. In the non-use position NU, the operational part 11 also makes it possible to drive the car in the normal way by means of foot pedals, without obstructions disturbing the driver or the passengers. The installation of the operational part 11 in the cockpit structures can be implemented by means of a pivoted arm or the like, wherein the operational part 11 can be turned/moved from the use position U to the non-use position NU without actually removing the operational part 11 from the vehicle. The non-use position NU of the operational part 11 can also be a position, in which the operational part 11 is only turned, in comparison with the use position U, so that the handle 13 substantially points in the direction of the front or the rear of the vehicle, wherein the handle 13 will disturb less the driver's movements. Preferably, the operational part 11 can be locked in the use position U and in the non-use position NU, to prevent unintentional shifting of the operational part 11 during driving the vehicle. Furthermore, the handle 13 of the operational part 11 can be locked to be stationary when the operational part 11 is in the non-use position NU. Instead of stationary structures, the operational part 11 can also be fixed to the driver's seat 62, wherein the operational part is moved with said seat, for example during adjustment of the distance between the seat and the steering wheel 61 to be suitable for the driver. The operational part 11 can also be arranged to be movable with the movements of the steering wheel 61.

When a flexible and pressure-tight tube is used as the material for the hydraulic pipes 20 and 21, it is possible to move the operational part 11 from the use position U into the non-use position NU in the above-described manner without removing the pipes 20 and 21 from the operational part 11. Naturally, the pipes 20 and 21 can also be equipped with connectors 63 and 64, shown in principle in Fig. 6, such as, for example, quick disconnect connectors, which make it possible to remove or to cut said pipes at a suitable point without hydraulic fluid leaking from the pipes 20 and 21 and/or air entering inside the pipes. Thus, the operational part 11 can be completely removed from the vehicle in a quick and convenient manner.

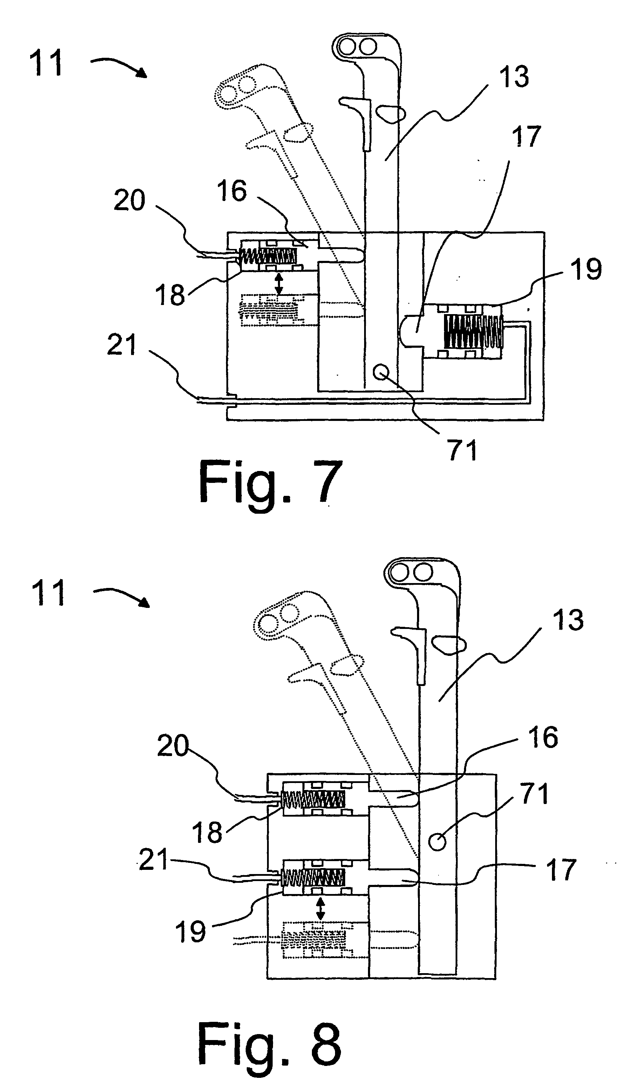

Furthermore, Figs. 7 and 8 show, in principle views, some alternative embodiments of the operational part 11 of the control device HC according to the invention, illustrating, for example, the possibilities to adjust the factors on the feedback feeling of the control device in more detail.

Figure 7 shows, in a principle view, one embodiment of the operational part 11 of the control device HC according to the invention, in which the first hydraulic cylinders 18 and 19 are arranged, in the direction of movement of the handle 13, to be pivotable at their lower ends in relation to a shaft 71, in front of and behind said handle in such a way that the arm part between the upper and lower ends of the handle 13 is directly effective on the piston means 16 and 17. The feedback feeling of the control device HC, and/or suitability of the hand control device for the driver or the vehicle, can be influenced by the following ways. By changing, for example, the distance between the hydraulic cylinder 18 and the shaft 71 forming the pivot of the handle as illustrated by a broken line in Fig. 7, it is possible to change the length of the lever arm which converts the movement of the handle 13 to a movement of the piston means 16. In other words, the length of the movement of the handle 13 required for producing the movement of said piston means along a given distance, and the force required for it, are changed in the above-mentioned way. In the embodiment of the operational part 11 presented in a principle view in Fig. 7, a different lever arm is effective on the piston means 16 and 17 of the hydraulic cylinders 18 and 19, because the hydraulic cylinders 18 and 19 are placed at different distances from the shaft 71 of the handle 13.

The feedback feeling, and/or the suitability for the driver or the vehicle, can also be influenced by changing the ratio between the surface areas of the so-called first piston means, forming the independent hydraulic circuit and placed in the operational part 11, and the so-called second piston means, effective on the pedal. In the embodiment shown in Fig. 7, the first hydraulic cylinders 18 and 19 are selected to have unequal diameters, wherein if the second hydraulic cylinders 22 and 23, effective on the foot pedals 26 and 27, have equal diameters, the movement of the handle 13 will have a different effect on the different pedals.

Furthermore, Fig. 8 shows, in a principle view; one embodiment of the operational part 11, in which the first hydraulic cylinders 18 and 19 are placed on different sides of the pivot formed by the shaft 71 of the handle 13. This makes it possible to place both of said hydraulic cylinders in the operational part 11, in the direction of movement of the handle 13, for example in front of the same, which will, for example, make it possible for the hydraulic pipes 20 and 21 to extend, correspondingly, in a natural way forward at the front of the operational part 11. This will make it easier, in some situations, to install the operational part 11 in the cabin of the vehicle. Figure 8 also shows, in a principle way by means of a broken line, a possibility of adjustment, whereby the hydraulic cylinder 19 can be moved at different distances from the shaft 71 to alter the lever arm effective on said hydraulic cylinder in the manner described earlier.

Because persons with restricted movability of the lower limbs may also often have restricted capability to use the hands compared to the normal, it is very important that the properties of the control device HC can be fitted in the above-described ways and adjusted to be ergonomically best suitable for each driver. Also various vehicles, in which control devices HC are installed, differ from each other, to some extent, in the force required for the use of the foot pedals as well as in the length of the paths of the foot pedals. Thus, thanks to the above-described adjustment possibilities, the control device according to the invention can also be easily fitted in different vehicles. In the implementation of the control device HC, the wear in use of the brake pads of the brakes in the vehicle is also taken into account, which will increase the depression of the brake pedal of the vehicle. For this reason, in the hydraulic circuit to be used for braking, the paths of the piston means are arranged to be sufficiently long to take into account the increase in the depression of the brake pedal.

It will be obvious for anyone skilled in the art that the various embodiments of the invention are not restricted solely to the examples presented above, but they may vary within the inventive aspects of the claims to be presented hereinbelow.

In the control device according to the invention, it is possible to use any suitable, substantially incompressible and non-freezing fluid as the hydraulic fluid. The fluid can thus also be another fluid than hydraulic oil.

The structure of the first and second hydraulic cylinders can be any structure known as such, in which so-called O-ring seatings are used for sealing the pistons in the cylinders, or the piston structures made of a suitable material (such as Teflon) can also be arranged to operate without separate sealings in the cylinders. Preferably, the first hydraulic cylinders 18 and 19 are made by machining said hydraulic cylinders directly in the frame of the operating part 11. However, it is also possible to use suitable hydraulic cylinders to be acquired as separate components, which are fixed to the frame of the operating part 11.

The hydraulic pipes 20 and 21 can be made of any material suitable for the purpose. If necessary, the hydraulic pipes can also be implemented by using rigid metal tubes.

It will be obvious for anyone skilled in the art that the independent first hydraulic circuit 18, 20, 22 and/or the independent second hydraulic circuit 19, 21, 23 in the control device according to the invention can also be doubled, by using solutions known as such from prior art, if necessary. For example, in the first hydraulic circuit 18, 20, 22 effective on the brake pedal, it is possible to use two first hydraulic cylinders 18 which are effective in parallel in the operational part 11 and are, respectively, coupled by means of separate pipes or tubes 20 to two second hydraulic cylinders 22 operating in parallel and effective on the brake pedal 26. By this arrangement, it is possible to improve the reliability of the control device further, because in case either of the two parallel hydraulic circuits is damaged, the remaining hydraulic circuit can still be used to exert a force on the brake pedal of the vehicle.

In contrast with the preceding examples, the operating part 11 can be placed within reach for the driver in the vehicle in such a way that the handle 13 can, in its use position, extend sidewards, downwards or also in other positions which are ergonomically suitable for the driver. It is also possible that the movement of the handle 13 to exert a force on the foot pedals takes place in another direction than that substantially corresponding to the direction of movement of the vehicle. Furthermore, the control device HC according to the invention can have separate handles to exert a force on different hydraulic circuits and thereby on different foot pedals.

The embodiments of the invention are not restricted to hand operated control devices only, but the control device of the invention can also be operated, either partly or wholly, by other, one or more body parts of the driver in a way which complies best with the personal qualities and capabilities of the driver with restricted mobility.

## Claims

1. A control device (HC) for operating one or several foot pedal control devices (26; 27) in a vehicle, **characterized in that** the control device (HC) comprises means (11, 12, 22; 11, 21, 23) for transmitting hydrostatically, without any auxiliary power source, the movement and force produced manually on an actuator (13) of the control device (HC) by the driver with his/her own muscular strength, to the foot pedal control device/devices (26, 27) of the vehicle.

2. The control device (HC) according to claim 1, **characterized in that** the control device (HC) comprises
- at least one operating part (11) arranged within reach for the driver,
- at least one actuator (13) included in the operating part (11) and arranged to be movable in relation to the operating part (11),
- at least one first hydraulic cylinder (18; 19) included in the operating part (11), and a piston means (16; 17) belonging to the same,
- a mechanism (13; 14; 15) for transmitting the movement of the actuator (13) to the piston means (16; 17) of the first hydraulic cylinder (18; 19),
- at least one second hydraulic cylinder (22; 23) arranged to act on a foot pedal control device (26; 27) in the vehicle, and a piston means (24; 25) belonging to the same,
- at least one pipe/tube (20; 21) connecting the first (18; 19) and second (22, 23) hydraulic cylinders, said first hydraulic cylinder (18; 19), pipe/tube (20; 21) and second hydraulic cylinder forming at least a first independent hydraulic circuit (18, 20, 22; 19, 21, 23).

3. The control device (HC) according to claim 2, **characterized in that** the control device (HC) comprises separate, independent hydraulic circuits (18, 20, 22; 19, 21, 23) for the different foot pedal control devices (26; 27) of the vehicle.

4. The control device (HC) according to claim 3, **characterized in that** the control device (HC) comprises one actuator (13), which same actuator (13) is arranged to act, by means of the first independent hydraulic circuit (18, 20, 22), on the first foot pedal control device (26) of the vehicle, such as, for example, the brake pedal, and by means of the second independent hydraulic circuit (19, 21, 23), on the second foot pedal control device (27) of the vehicle, such as, for example, the accelerator pedal.

5. The control device (HC) according to claim 4, **characterized in that** the actuator (13) is arranged to act on said first hydraulic circuit (18, 20, 22) when the driver moves/turns said actuator (13) in a first direction, and the actuator (13) is arranged to act on said second hydraulic circuit (19, 21, 23) when the driver turns/moves the actuator (13) in the opposite direction.

6. The control device (HC) according to claim 4 or 5, **characterized in that** the hydraulic circuit (18, 20, 22; 19, 21, 23) comprises one or more means (28, 30; 29, 31) for returning said hydraulic circuit back to its normal position after the termination of the effect of the actuator (13).

7. The control device (HC) according to any of the claims 2 to 6 presented above, **characterized in that**, for adjusting the properties of the control device (HC) according to the driver and/or the vehicle, the cross-sectional area of the piston means (16; 17) of the first hydraulic cylinder (18; 19) interacting with the hydraulic fluid, in relation to the respective area of the piston means (24; 25) of the second hydraulic cylinder (22; 23) in the same hydraulic circuit (18, 20, 22; 19, 21, 23), can be changed.

8. The control device (HC) according to any of the claims 2 to 7 above, **characterized in that**, for adjusting the properties of the control device (HC) according to the driver and/or the vehicle, the properties of the mechanism transmitting the movement and force of the actuator (13) to the piston means (16, 17) of the first hydraulic cylinder (18; 19), such as, for example, the transmission ratio of said mechanism (13, 14, 15) and/or the length of the lever arm/arms forming the mechanism, can be changed.

9. The control device (HC) according to any of the claims 2 to 8 above, **characterized in that** the actuator (13) comprises means (44, 45, 46) for locking said actuator in a position (B), in which position the control device (HC) is used to act on the brake pedal (26) of the vehicle.

10. The control device (HC) according to any of the claims 2 to 9 above, **characterized in that** the actuator (13) comprises means (41, 42, 43) for acting on the brake pedal (26) of the vehicle in a situation, in which the actuator (13) is in a position (C), in which position the control device (HC) is used to simultaneously act on the accelerator pedal (27) of the vehicle.

11. The control device (HC) according to any of the claims 2 to 10 above, **characterized in that** the operating part (11) of the control device (HC) comprises means for transferring said operating part from a use position (U) to a non-use position (NU).

12. The control device (HC) according to any of the claims 2 to 11 above, **characterized in that** said actuator (13) is a handle operable with an upper limb or a foot lever operable with a lower limb.

13. The control device (HC) according to any of the claims 2 to 12 above, **characterized in that** one or more of the separate, independent hydraulic circuits (18, 20, 22; 19, 21, 23) included in the control device (HC) are doubled.

14. A method for actuating one or several foot pedal control devices (26, 27) of a vehicle by means of a control device (HC) according to any of claims 1- 13 and installed in the vehicle, **characterized in that** the movement and force produced manually by the driver with his/her muscular strength on the actuator (13) of the control device (HC) are arranged to be transmitted hydrostatically, without any auxiliary power source, to the original foot pedal control device (26; 27) of the vehicle.

15. The method according to claim 14, **characterized in that** the movement and force produced manually on the actuator (13) of said control device (HC) are arranged to be transmitted to the piston means (16; 17) of the first hydraulic cylinder (18; 19), from which first hydraulic cylinder the volume flow and fluid pressure of the hydraulic fluid, caused by the movement of said piston means (16; 17), are arranged to be led along a pipe/tube (20, 21) to the second hydraulic cylinder (22; 23), the movement and force of the piston means (24; 25) of the second hydraulic cylinder being arranged to be transmitted further, by means of the first independent hydraulic circuit (18, 20,22; 19, 21, 23) thus formed, to the foot pedal control device (26; 27) of the vehicle.

16. The method according to claim 15, **characterized in that** said control means (HC) is arranged to comprise, for each foot pedal control device (26; 27) of the vehicle, a separate independent hydraulic circuit (18, 20, 22; 19, 21, 23), and that said hydraulic circuits are arranged to be exerted on by one and the same actuator (13).

17. The method according to claim 16, **characterized in that** one or more of said independent hydraulic circuits (18, 20, 22; 19, 21, 23) are doubled.

## Patentansprüche

1. Eine Steuerungsvorrichtung (HC) zur Betätigung einer oder mehrerer Fusspedal-Steuerungsvorrichtungen (26; 27) in einem Fahrzeug, **dadurch gekennzeichnet, dass** die Steuerungsvorrichtung (HC) Mittel (11, 12, 22; 11, 21, 23) enthält zur hydrostatischen Übertragung, ohne jede zusätzliche Kraftquelle, der vom Fahrer mittels seiner eigenen Muskelkraft von Hand an einem Aktuator (13) der Steuerungsvorrichtung (HC) erzeugten Bewegung und Kraft auf die Fusspedal- Steuerungsvorrichtung/Fusspedal-Steuerungsvorrichtungen (26, 27) des Fahrzeugs.

2. Die Steuerungsvorrichtung (HC) nach Anspruch 1, **dadurch gekennzeichnet, dass** die Steuerungsvorrichtung (HC)
- mindestens ein in Reichweite des Fahrers angeordnetes Betriebsteil (11),
- mindestens einen im Betriebsteil (11) enthaltenen und im Bezug auf das Betriebsteil (11) beweglich angeordneten Aktuator (13),
- mindestens einen im Betriebsteil (11) enthaltenen ersten hydraulischen Zylinder (18; 19), und ein zu diesem gehöriges Kolben-Mittel (16; 17),
- einen Mechanismus (13; 14; 15) zur Übertragung der Bewegung des Aktuators (13) auf die Kolben-Mittel (16; 17) des ersten hydraulischen Zylinders (18; 19),
- mindestens einen zweiten hydraulischen Zylinder (22; 23), eingerichtet um auf eine Fusspedal-Steuerungsvorrichtung (26; 27) im Fahrzeug zu wirken, und ein zu diesem gehöriges Kolben-Mittel (24; 25),
- mindestens eine Röhre/ein Schlauch (20; 21), welche den ersten (18; 19) und den zweiten (22, 23) hydraulischen Zylinder verbindet, wobei genannte erster hydraulischer Zylinder (18; 19), Schlauch/Röhre (29; 21) und zweiter hydraulischer Zylinder mindestens einen ersten unabhängigen hydraulischen Kreislauf (18, 20, 22; 19, 21, 23) bilden,
enthält.

3. Die Steuerungsvorrichtung (HC) nach Anspruch 2, **dadurch gekennzeichnet, dass** die Steuerungsvorrichtung (HC) getrennte, unabhängige hydraulische Kreisläufe (18, 20, 22; 19, 21, 23) für die verschiedenen Fusspedal-Steuerungsvorrichtungen (26; 27) des Fahrzeugs enthält.

4. Die Steuerungsvorrichtung (HC) nach Anspruch 3, **dadurch gekennzeichnet, dass** die Steuerungsvorrichtung (HC) einen Aktuator (13) enthält, wobei dieser Aktuator (13) so eingerichtet ist, dass er mittels des ersten unabhängigen hydraulischen Kreislaufs (18, 20, 22) auf die erste Fusspedal-Steuerungsvorrichtung (26) des Fahrzeugs, zum Beispiel das Bremspedal, und mittels des zweiten unabhängigen hydraulischen Kreislaufs (19, 21, 23) auf die zweite Fusspedal-Steuerungsvorrichtung (27) des Fahrzeugs, zum Beispiel das Gaspedal, wirkt.

5. Die Steuerungsvorrichtung (HC) nach Anspruch 4, **dadurch gekennzeichnet, dass** der Aktuator (13) so eingerichtet ist, dass er auf den genannten ersten hydraulischen Kreislauf (18, 20, 22) wirkt, wenn der Fahrer den genannten Aktuator (13) in eine erste Richtung bewegt/dreht, und der Aktuator (13) so angeordnet ist, dass er auf den genannten zweiten hydraulischen Kreislauf (19, 21, 23) wirkt, wenn der Fahrer den Aktuator (13) in die entgegengesetzte Richtung bewegt/dreht.

6. Die Steuerungsvorrichtung (HC) nach Anspruch 4 oder 5, **dadurch gekennzeichnet, dass** der hydraulische Kreislauf (18, 20, 22; 19, 21, 23) ein oder mehr Mittel (28, 30; 29, 31) enthält, um den genannten hydraulischen Kreislauf nach der Beendigung des Effekts des Aktuators (13) zurück in seine Grundstellung zu bringen.

7. Die Steuerungsvorrichtung (HC) nach irgendeinem der obenstehenden Ansprüche 2 bis 6, **dadurch gekennzeichnet, dass,** zur Anpassung der Eigenschaften der Steuerungsvorrichtung (HC) entsprechend dem Fahrer und/oder dem Fahrzeug, die Querschnitts-Fläche des Kolben-Mittels (16; 17) des mit der hydraulischen Flüssigkeit wechselwirkenden ersten hydraulischen Zylinders (18; 19), in Bezug zur entsprechenden Fläche des Kolben-Mittels (24; 25) des zweiten hydraulischen Zylinders (22; 23) im gleichen hydraulischen Kreislauf (18, 20, 22; 19, 21, 23) geändert werden kann.

8. Die Steuerungsvorrichtung (HC) nach irgendeinem der obenstehenden Ansprüche 2 bis 7, **dadurch gekennzeichnet, dass,** zur Anpassung der Eigenschaften der Steuerungsvorrichtung (HC) entsprechend dem Fahrer und/oder dem Fahrzeug, die Eigenschaften des die Bewegung und Kraft des Aktuators (13) auf die Kolben-Mittel (16, 17) des ersten hydraulischen Zylinders (18; 19) übertragenden Mechanismus, wie zum Beispiel das Übertragungs-Verhältnis des genannten Mechanismus (13, 14, 15) und/oder die Länge des Hebelarms/der Hebelarme, die den Mechanismus bilden, geändert werden können.

9. Die Steuerungsvorrichtung (HC) nach irgendeinem der obenstehenden Ansprüche 2 bis 8, **dadurch gekennzeichnet, dass** der Aktuator (13) Mittel (44, 45, 46) enthält, um den genannten Aktuator in einer Position (B) zu arretieren, in welcher die Steuervorrichtung (HC) benutzt wird, um auf das Bremspedal (26) des Fahrzeugs zu wirken.

10. Die Steuerungsvorrichtung (HC) nach irgendeinem der obenstehenden Ansprüche 2 bis 9, **dadurch gekennzeichnet, dass** der Aktuator (13) Mittel (41, 42, 43) enthält, um in einer Situation auf das Bremspedal (26) des Fahrzeugs zu wirken, in welcher der Aktuator (13) in einer Position (C) ist, in der die Steuerungsvorrichtung (HC) benutzt wird, um gleichzeitig auf das Gaspedal (27) des Fahrzeugs zu wirken.

11. Die Steuerungsvorrichtung (HC) nach irgendeinem der obenstehenden Ansprüche 2 bis 10, **dadurch gekennzeichnet, dass** das Betriebsteil (11) der Steuerungsvorrichtung (HC) Mittel enthält, um das genannte Betriebsteil von einer Benützungs-Stellung (U) in eine Nicht-Benützungs-Stellung (NU) zu versetzen.

12. Die Steuerungsvorrichtung (HC) nach irgendeinem der obenstehenden Ansprüche 2 bis 11, **dadurch gekennzeichnet, dass** der genannte Aktuator (13) ein mit einer oberen Gliedmasse bedienbarer Griff oder ein mit einer unteren Gliedmasse bedienbarer Fusshebel ist.

13. Die Steuerungsvorrichtung (HC) nach irgendeinem der obenstehenden Ansprüche 2 bis 12, **dadurch gekennzeichnet, dass** einer oder mehrere der in der Steuerungsvorrichtung (HC) enthaltenen getrennten, unabhängigen hydraulischen Kreisläufe (18, 20, 22; 19, 21, 23) doppelt vorhanden sind.

14. Ein Verfahren zur Betätigung einer oder mehrerer Fusspedal-Steuerungsvorrichtungen (26, 27) eines Fahrzeugs mittels einer im Fahrzeug installierten Steuerungsvorrichtung (HC) nach irgendeinem der Ansprüche 1 bis 13, **dadurch gekennzeichnet, dass** die vom Fahrer von Hand mittels seiner eigenen Muskelkraft am Aktuator (13) der Steuerungsvorrichtung (HC) erzeugte Bewegung und Kraft zur hydrostatischen Übertragung, ohne jede zusätzliche Kraftquelle, auf die ursprüngliche Fusspedal-Steuerungsvorrichtung (26; 27) des Fahrzeugs eingerichtet ist.

15. Das Verfahren nach Anspruch 14, **dadurch gekennzeichnet, dass** die von Hand am Aktuator (13) der genannten Steuerungsvorrichtung (HC) erzeugte Bewegung und Kraft eingerichtet ist, um auf das Kolben-Mittel (16; 17) des ersten hydraulischen Zylinders (18; 19) übertragen zu werden, bei welchem der Volumenfluss und Flüssigkeitsdruck der hydraulischen Flüssigkeit, verursacht durch die Bewegung des genannten Kolben-Mittels (16; 17), eingerichtet ist, um entlang einer Röhre/einem Schlauch (20, 21) zum zweiten hydraulischen Zylinder (22; 23) geleitet zu werden, wobei die Bewegung und Kraft des Kolben-Mittels (24; 25) des zweiten hydraulischen Zylinders eingerichtet ist, mittels des **dadurch** gebildeten ersten unabhängigen hydraulischen Kreislaufs (18, 20, 22; 19, 21, 23) weitergeleitet zu werden auf die Fusspedal-Steuerungsvorrichtung (26; 27) des Fahrzeugs.

16. Das Verfahren nach Anspruch 15, **dadurch gekennzeichnet, dass** die genannte Steuerungsvorrichtung (HC) eingerichtet ist, für jede Fusspedal-Steuerungsvorrichtung (26; 27) des Fahrzeugs einen getrennten unabhängigen hydraulischen Kreislauf (18, 20, 22; 19, 21, 23) zu enthalten, und dass die genannten hydraulischen Kreisläufe eingerichtet sind, von ein und demselben Aktuator (13) betätigt zu werden.

17. Das Verfahren nach Anspruch 16, **dadurch gekennzeichnet, dass** einer oder mehrere der genannten unabhängigen hydraulischen Kreisläufe (18, 20, 22; 19, 21, 23) doppelt vorhanden sind.

## Revendications

1. Un dispositif de commande (HC) pour actionner un ou plusieurs dispositifs de commande à pédale (26; 27) dans un véhicule, **caractérisé par le fait que** le dispositif de commande (HC) comprend des moyens (11, 12, 22; 11, 21, 23) pour transmettre, de façon hydrostatique et sans aucune source d'énergie auxiliaire, le mouvement et la force, produits manuellement sur un actionneur (13) du dispositif de commande (HC) par le conducteur avec sa propre force musculaire, au(x) dispositif(s) de commande à pédale (26, 27) du véhicule.

2. Le dispositif de commande (HC) selon la revendication 1, **caractérisé par le fait que** le dispositif de commande (HC) comprend:
- au moins une partie d'actionnement (11) arrangée dans un espace environnant atteignable par le conducteur,
- au moins un actionneur (13) inclus dans la partie d'actionnement (11) et arrangé de façon à être mobile par rapport à la partie d'actionnement (11),
- au moins un premier cylindre hydraulique (18; 19) inclus dans la partie d'actionnement (11) et des moyens à piston (16; 17) appartenant à ce même premier cylindre hydraulique (11),
- un mécanisme (13; 14; 15) pour transmettre le mouvement de l'actionneur (13) aux moyens à piston (16; 17) du premier cylindre hydraulique (18; 19),
- au moins un deuxième cylindre hydraulique (22; 23) arrangé de façon à agir sur un dispositif de commande à pédale (26; 27) dans le véhicule et des moyens à piston (24 ; 25) appartenant à ce même deuxième cylindre hydraulique (22; 23),
- au moins un tuyau / tube (20; 21) reliant le premier cylindre hydraulique (18; 19) et le deuxième cylindre hydraulique (22, 23), ledit premier cylindre hydraulique (18 ; 19), le tuyau / tube (20; 21) et le deuxième cylindre hydraulique formant au moins un premier circuit hydraulique indépendant (18, 20, 22; 19, 21, 23).

3. Le dispositif de commande (HC) selon la revendication 2, **caractérisé par le fait que** le dispositif de commande (HC) comprend des circuits hydrauliques séparés et indépendants (18, 20, 22; 19, 21, 23) pour les différents dispositifs de commande à pédale (26; 27) du véhicule.

4. Le dispositif de commande (HC) selon la revendication 3, **caractérisé par le fait que** le dispositif de commande (HC) comporte un actionneur (13), lequel dit même actionneur (13) est arrangé de façon à agir, à l'aide du premier circuit hydraulique indépendant (18, 20, 22), sur le premier dispositif de commande à pédale (26) du véhicule, comme par exemple, la pédale de frein et de façon à agir, à l'aide du deuxième circuit hydraulique indépendant (19, 21, 23), sur le deuxième dispositif de commande à pédale (27) du véhicule, comme, par exemple, la pédale d'accélérateur.

5. Le dispositif de commande (HC) selon la revendication 4, **caractérisé par le fait que** l'actionneur (13) est placé de façon à agir sur ledit premier circuit hydraulique (18, 20, 22) quand le conducteur bouge / tourne le dit actionneur (13) dans une première direction et l'actionneur (13) est arrangé de façon à agir sur ledit deuxième circuit hydraulique (19, 21, 23) quand le conducteur tourne / bouge l'actionneur (13) dans la direction opposée.

6. Le dispositif de commande (HC) selon la revendication 4 ou 5, **caractérisé par le fait que** le circuit hydraulique (18, 20, 22; 19, 21, 23) comprend un ou plusieurs moyens (28, 30; 29, 31) pour renvoyer à nouveau ledit circuit hydraulique dans sa position normale après cessation de l'effet de l'actionneur (13).

7. Le dispositif de commande (HC) selon une des revendications de 2 à 6 présentées ci-dessus, **caractérisé par le fait que** pour ajuster les propriétés du dispositif de commande (HC) selon le conducteur et/ou le véhicule, la surface de section transversale des moyens à piston (16; 17) du premier cylindre hydraulique (18; 19) agissant avec le fluide hydraulique par rapport à la surface respective des moyens à piston (24; 25) du deuxième cylindre hydraulique (22; 23) dans le même circuit hydraulique (18, 20, 22; 19, 21, 23) peut être changée.

8. Le dispositif de commande (HC) selon une des revendications de 2 à 7 ci-dessus, **caractérisé par le fait que**, pour ajuster les propriétés du dispositif de commande (HC) selon le conducteur et/ou le véhicule, les propriétés du mécanisme transmettant le mouvement et la force de l'actionneur (13) aux moyens à piston (16, 17) du premier cylindre hydraulique (18; 19), comme par exemple le rapport de transmission dudit mécanisme (13, 14, 15) et/ou la longueur du/des bras de levier formant le mécanisme, peuvent être changés.

9. Le dispositif de commande (HC) selon une des revendications de 2 à 8 ci-dessus, **caractérisé par le fait que** l'actionneur (13) comporte des moyens (44, 45, 46) pour fixer ledit actionneur dans une position (B), dans laquelle le dispositif de commande (HC) est utilisé pour agir sur la pédale de frein (26) du véhicule.

10. Le dispositif de commande (HC) selon une des revendications de 2 à 9 ci-dessus, **caractérisé par le fait que** l'actionneur (13) comprend les moyens (41, 42, 43) pour d'agir sur la pédale de frein (26) du véhicule dans une situation, dans laquelle l'actionneur (13) est dans une position (C), dans laquelle le dispositif de commande (HC) est utilisé pour agir simultanément sur la pédale d'accélérateur (27) du véhicule.

11. Le dispositif de commande (HC) selon une des revendications de 2 à 10 ci-dessus, **caractérisé par le fait que** la partie d'actionnement (11) du dispositif de commande (HC) comprend des moyens pour transférer ladite partie d'actionnement d'une position d'utilisation (U) à une position de non utilisation (NU).

12. Le dispositif de commande (HC) selon une des revendications de 2 à 11 ci-dessus, **caractérisé par le fait que** ledit actionneur (13) est une poignée manoeuvrable avec un membre supérieur ou une pédale manoeuvrable avec un membre inférieur.

13. Le dispositif de commande (HC) selon une des revendications de 2 à 12 ci-dessus, **caractérisé par le fait que** un ou plusieurs des circuits hydrauliques séparés et indépendants (18, 20, 22; 19, 21, 23) inclus dans le dispositif de commande (HC) sont doublés.

14. Une méthode pour actionner un ou plusieurs dispositifs de commande à pédale (26, 27) d'un véhicule à l'aide d'un dispositif de commande (HC) selon une des revendications de 1 à 13 et installés dans le véhicule, **caractérisée par le fait que** le mouvement et la force produits manuellement par le conducteur avec sa force musculaire sur l'actionneur (13) du dispositif de commande (HC) sont arrangés de façon à être transmis de manière hydrostatique, sans aucune autre source d'énergie auxiliaire, au dispositif de commande à pédale original (26; 27) du véhicule.

15. La méthode selon la revendication 14, **caractérisée par le fait que** le mouvement et la force produits manuellement sur l'actionneur (13) dudit dispositif de commande (HC) sont arrangés de façon à être transmis aux moyens à piston (16; 17) du premier cylindre hydraulique (18; 19) et à partir de ce premier cylindre hydraulique le débit et la pression du liquide du fluide hydraulique, provoqués par le mouvement desdits moyens à piston (16; 17), sont arrangés de façon à être conduits le long d'un tuyau / tube (20, 21) au deuxième cylindre hydraulique (22; 23), le mouvement et la force des moyens à piston (24; 25) du deuxième cylindre hydraulique étant disposés de façon à être ultérieurement transmis, à l'aide du premier circuit hydraulique indépendant (18, 20, 22; 19, 21, 23) ainsi formé, au dispositif de commande à pédale (26; 27) du véhicule.

16. La méthode selon la revendication 15, **caractérisée par le fait que** lesdits moyens de commande (HC) sont arrangés de façon à comporter, pour chaque dispositif de commande à pédale (26; 27) du véhicule, un circuit hydraulique indépendant séparé (18, 20, 22; 19, 21, 23), et lesdits circuits hydrauliques sont arrangés de façon à être actionnés par un seul et même actionneur (13).

17. La méthode selon la revendication 16, **caractérisée par le fait qu'**un ou plusieurs desdits circuits hydrauliques indépendants (18, 20, 22; 19, 21, 23) sont doublés.
